Europäisches Patentamt

European Patent Office

Office européen des brevets

(19)

(11) Publication number: **0 058 802**
A1

# EUROPEAN PATENT APPLICATION

(12)

(21) Application number: **81305854.2**

(22) Date of filing: **11.12.81**

(51) Int. Cl.³: **B 23 K 35/26**

(30) Priority: **19.12.80 ZA 807977**

(43) Date of publication of application: **01.09.82**
**Bulletin 82/35**

(84) Designated Contracting States: **AT BE CH DE FR IT LI LU NL SE**

(71) Applicant: **UNIVERSAL SOLDER COMPANY (PTY) LIMITED, P.O. Box 25, Durban Natal (ZA)**

(72) Inventor: **Strike, Tony Edward Dennis, 18 Acacia Road, Glenwood Durban, Natal (ZA)**
Inventor: **Pascoal, Daniel Rodrigues, 1 Luton Place, Westville North Natal (ZA)**

(74) Representative: **Howden, Christopher Andrew et al, FORRESTER & BOEHMERT Widenmayerstrasse 4/I, D-8000 München 22 (DE)**

(54) **Solder.**

(57) A solder is disclosed for joining a wide variety of metals or their alloys to themselves or to other metals or alloys, and which solder comprises from 80 percent to 40 percent by mass of thin and from 60 percent to 20 percent by mass of zinc. A preferred solder comprises about 75 percent of tin and 25 percent of zinc.

EP 0 058 802 A1

COMPLETE DOCUMENT

.TITLE MODIFIED
see front page

"Improvements in solders"

THIS INVENTION relates to solders and is particularly concerned with solders which can be used successfully to join a wide variety of different metals.

The prior art is replete with technical details concerning an infinite number of compositions useful as solders. Some of such compositions have very specific uses while others have more general use. Some metals are notoriously difficult to solder either to themselves or to other metals, and a particular example of such a metal is aluminium.

It is an object of the present invention to provide a solder which is not only easy to produce, but which may also be used for a wide variety of metals.

According to the invention there is provided a solder comprising tin and zinc, the amount of tin not exceeding 80 percent nor being less than 40 percent by mass and the amount of zinc not exceeding 60 percent nor being less than 20 percent by mass.

In the preferred form of the invention the solder contains 75 percent by mass of tin and 25 percent by mass of zinc.

It will be appreciated that traces of other metals may be present in the solder and a typical analysis of such traces is as follows:

| | |
|---|---|
| Copper | 0,006 - 0,01 percent by weight |
| Iron | 0,025 - 0,065 percent by weight |
| Lead | 0,05 - 0,4 percent by weight |

The solder of the invention may be used for soldering together any of the following metals to themselves or to any other or others:-

Aluminium and its alloys to other metals and alloys

Magnesium

Pewter

Zinc and its alloys

Copper and its alloys

Brass and its alloys

Bronze and its alloys

Stainless steel

Chrome steel

Nickel alloy steels

Tungsten steels

High speed steels

Mild steels

Galvanised iron

Tin plate.

CLAIMS

1. A solder for joining a wide variety of metals or their alloys to themselves or to other metals or other alloys comprising tin and zinc, the amount of tin not exceeding 80 percent nor being less than 40 percent by mass, and the amount of zinc not exceeding 60 percent nor being less than 20 percent by mass.

2. A solder according to claim 1 in which the solder contains 75 percent of tin and 25 percent of zinc by mass.

3. The use of a solder comprising no more than 80 percent nor less than 40 percent by mass of tin and no more than 60 percent nor less than 20 percent by mass of zinc, for joining a wide variety of metals or their alloys to themselves or to other metals or other alloys.

4. The use of a solder in accordance with claim 3 in which the solder contains 75 percent of tin and 25 percent of zinc by mass.

## DOCUMENTS CONSIDERED TO BE RELEVANT

| Category | Citation of document with indication, where appropriate, of relevant passages | Relevant to claim |
|---|---|---|
| X | <u>GB - A - 671 079</u> (R. CHADWICK et al.) <br><br> * page 2, table; claims * <br><br> -- | 1-4 |
| X | <u>CH - A - 219 719</u> (K. HERMANN) <br><br> * the whole document * <br><br> -- | 1-4 |
| X | <u>GB - A - 131 299</u> (S.A. DES LAMINOIRS ET CABLERIE etc.) <br><br> * claim 1; page 1, lines 64-69 * <br><br> -- | 1,3 |
| X | <u>FR - A - 417 225</u> (G. CAZALAS et al.) <br><br> * page 1, lines 17-26 * <br><br> -- | 1,3 |
| X | <u>CH - A - 96 904</u> (M.S. CORSAT) <br><br> * the whole document * <br><br> ------ | 1,3 |

**CLASSIFICATION OF THE APPLICATION (Int. Cl. 3)**

B 23 K 35/26

**TECHNICAL FIELDS SEARCHED (Int.Cl. 3)**

B 23 K

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 29-03-1982 | MOLLET |

EPO Form 1503.1 06.78